# FASCICULE DE BREVET EUROPEEN

(11) **EP 2 844 561 B1**
(45) Date de publication et mention de la délivrance du brevet: **12.10.2016**
(21) Numéro de dépôt: 13729456.7
(22) Date de dépôt: 03.05.2013
(51) Int. Cl.: B65B 29/02, B65B 31/02, A23F 3/12, B02C 18/18, B65B 59/04

(54) **CONDITIONNEMENT DE FEUILLES SECHEES EN CAPSULES HERMETIQUES**
VERPACKUNG VON GETROCKNETEN BLÄTTERN IN HERMETISCH VERSCHLOSSENEN KAPSELN
PACKAGING OF DRIED SHEETS IN SEALED CAPSULES

(30) Priorité: 04.05.2012 EP 12166912
(43) Date de publication de la demande: 11.03.2015
(73) Titulaire: Tpresso AG, 8008 Zürich (CH)
(72) Inventeur: FAVRE, Eric, CH-1040 St-Barthélemy (CH)
(74) Mandataire: Troesch Scheidegger Werner AG
(86) Numéro de dépôt international: PCT/IB2013/053535
(87) Numéro de publication internationale: WO 2013/164798

(56) Documents cités:
- WO-A1-2008/129350
- WO-A1-2010/007633
- GB-A- 238 391
- GB-A- 281 922
- GB-A- 559 937
- GB-A- 820 726
- GB-A- 1 363 754
- GB-A- 2 158 338
- US-A- 2 533 550

## Description

La présente invention concerne un procédé de conditionnement de feuilles ou de brindilles séchées alimentaires en capsules hermétiques. Les feuilles ou brindilles séchées comprennent notamment des thés, tisanes et herbes aromatiques.

Il est connu de réaliser des capsules hermétiques contenant des substances telles que du café, des bouillons ou du thé dans des capsules hermétiques pour la préparation de boissons chaudes. Un procédé de conditionnement de substances dans des capsules est décrit par exemple dans les publications WO2008/129530 et WO2010/007633. Typiquement, la capsule scellée hermétiquement est placée dans une machine comprenant une tête d'injection et une paroi de fond perforatrice, la tête d'injection perforant une paroi de la capsule pour l'injection d'eau chaude dans la capsule, et la paroi perforante ouvrant une paroi opposée de la capsule pour l'extraction de la boisson après le passage de l'eau à travers la substance contenue dans la capsule. Le conditionnement des substances telles que du café ou du thé dans des capsules hermétiques permet de préserver les propriétés de la substance pendant une durée relativement longue et ce jusqu'au moment de la préparation de la boisson.

Dans le cas du thé, l'on a deux situations : le thé est soit mis dans la capsule sous forme de feuilles séchées entières, soit sous forme de feuilles de thé séchées découpées ou écrasée en morceaux. Lorsque les feuilles sont entières, le temps d'extraction est plus long en raison de la surface plus faible comparée à une extraction à partir de feuilles coupées. Dans le cas de l'extraction du thé à partir de capsules par des machines d'injection d'eau, il est avantageux d'avoir un temps d'extraction aussi court que possible en raison du fonctionnement de la machine. En effet, un temps d'extraction de trois à cinq minutes, ce qui serait typique pour la préparation d'un thé dans une tasse ou dans une théière à partir d'un sachet ou de feuilles libres, ne serait pas acceptable pour la préparation d'un thé à partir de capsules par une machine d'extraction. D'ailleurs, que cela soit pour des feuilles de thé entières ou des feuilles découpées, l'oxydation de la surface réduit les qualités gustatives et olfactives du thé, ce problème étant aggravé lorsque les feuilles de thé sont découpées en petits morceaux. La pensée conventionnelle est donc de maintenir les feuilles entières pour assurer une grande qualité gustative, l'inconvénient étant un long temps d'extraction.

Des procédés connus de découpe ou d'écrasement de feuilles de thé en morceaux, telle que décrites dans les publications US2533550, GB281922 et GB820728 ne permettent pas d'éviter l'oxydation de la surface des morceaux de feuilles puisque les opérations de réduction sont effectués dans l'air. Par ailleurs, en raison de l'empilement des feuilles lors de leur cisaillement ou leur écrasement entre deux rouleaux tournent en contre-sens, il y a un apport thermique du aux frottements ou aux cisaillements qui précipite le scellement par oxydation et/ou par dessèchement de la surface de rupture exposé des feuilles cassées. Cela réduit la capacité de la feuille à absorber rapidement de l'eau, mais encore l'échauffement de la surface exposé peut aussi résulter en d'autres réactions chimiques altérant les propriétés gustatives et aromatiques du thé ou d'autres plantes alimentaires séchées.

Le problème décrit ci-dessus peut également affecter des feuilles d'autres plantes alimentaires séchées, par exemple des herbes aromatiques.

Un objet de l'invention est de réaliser un procédé de conditionnement de feuilles ou brindilles séchées de plantes alimentaires en capsules hermétiques et une machine pour la mise en oeuvre du procédé qui permettent de préparer une boisson ou un liquide alimentaire avec d'excellentes propriétés gustatives et aromatiques.

Un objet particulier de l'invention est de réaliser un procédé de conditionnement de feuilles de thé séchées en capsules hermétiques et une machine pour la mise en oeuvre du procédé qui permettent de préparer un thé avec d'excellentes propriétés gustatives et aromatiques.

Il est avantageux de fournir un procédé et une machine pour le conditionnement de thé ou d'un autre produit alimentaire en capsules qui permettent de préparer un thé ou autre liquide alimentaire en peu de temps.

Il est avantageux de fournir un procédé et une machine pour le conditionnement de thé ou d'un autre produit alimentaire en capsules hermétiques qui permettent de préparer un thé ou autre liquide alimentaire avec un très bon taux d'extraction des substances contenues dans les feuilles séchées.

Des buts de l'invention sont réalisés par le procédé selon la revendication 18 et un système pour le conditionnement de feuilles ou brindilles séchées de plantes en capsules hermétiques selon la revendication 1.

Dans la présente invention, on décrit un procédé de conditionnement de plantes alimentaires séchées, notamment de thé, dans une capsule hermétique, comprenant la brisure des feuilles séchées entières dans un environnement de gaz non-oxydant, l'insertion des feuilles brisées dans une capsule dans un environnement de gaz non-oxydant et la fermeture hermétique de la capsule. La brisure comprend une flexion des feuilles ou brindilles séchées jusqu'à leur rupture par flexion. De préférence l'on effectue plusieurs étapes de brisure des feuilles, une étape subséquente brisant les feuilles ou brindilles en morceaux plus petits qu'une étape précédente.

Dans la présente invention, on décrit un système pour le conditionnement de plantes alimentaires séchées, notamment de thé, dans une capsule hermétique. Le système comprend une machine pour briser des feuilles ou brindilles séchées de plantes alimentaires, notamment de thé, la machine comprenant une entrée pour une alimentation en feuilles ou brindilles séchées, une sortie pour la sortie des feuilles ou brindilles séchées brisées, et au moins un dispositif briseur comprenant un premier organe briseur et un deuxième organe briseur relativement amovible par rapport au premier organe briseur, les premier et deuxième organes briseurs étant configurés pour fléchir des feuilles ou brindilles séchées jusqu'à leur rupture par flexion. Selon l'invention, la machine comprend une source de gaz non-oxydant, tel que de l'azote, configurée pour alimenter l'environnement gazeux dans la machine afin d'éviter une oxydation des feuilles ou brindilles lors de la procédure de brisure jusqu'à leur insertion dans la capsule.

Selon un aspect de l'invention, la machine peut comprendre un dispositif d'alimentation disposé au dessus du premier dispositif briseur, configuré pour générer une pluie de feuilles ou brindilles distribuées tombant de manière non-groupées sur la surface dudit premier organe briseur. De préférence la pluie de feuilles ou brindilles est configuré afin que, pour la majorité des feuilles tombant sur le premier dispositif briseur, qu'une seule feuille ou brindille à la fois tombe dans une cavité du premier dispositif briseur. En effet, dans une situation idéal, qu'une seule feuille ou brindille à la fois (effet pluie) est présent dans chaque cavité afin d'éviter un effet d'écrasement des feuilles ou brindilles et en assurer les conditions optimales pour une brisure par flexion uniquement de chaque feuille ou brindille séchée. Dans l'invention, outre la génération d'une pluie de feuilles ou brindilles tombant sur le premier dispositif briseur, ce dernier est déplacé à une vitesse réglable pour tenir compte des caractéristiques des feuilles ou brindilles, notamment type de feuille ou brindille, origine, humidité, taille moyenne (diamètre, longueur).

Le dispositif d'alimentation peut avantageusement comprendre une grille ou autre plateau
vibrant ayant un bord de chute s'étendant sur toute la longueur du premier organe briseur et configuré pour générer une pluie ou rideau régulière et fine de feuilles ou brindilles séchées sur toute la longueur du premier organe briseur.

Le dispositif d'alimentation peut en outre comprendre un ou plusieurs grilles ou plateaux
vibrants disposés en amont dudit grille ou plateau vibrant pour désentasser et optimiser l'espacement les feuilles ou brindilles.

La machine peut avantageusement comprendre une pluralité de dispositifs briseurs, de préférence au moins trois dispositifs briseurs.

La machine peut avantageusement comprendre une pluralité de dispositifs briseurs montés l'un sur l'autre, par exemple montés l'un sur l'autre verticalement. Dans cette forme d'exécution, les feuilles brisées sont transportées d'un dispositif à l'autre par gravité. Toutefois, dans le cadre de cette invention, d'autres moyens de transport des feuilles entre les dispositifs briseurs successifs peuvent être employés, tels que des convoyeurs à bandes ou vibrants, ou par gaz soufflé.

Les dispositifs briseurs peuvent être disposés selon d'autres arrangements que verticalement, tels que horizontalement ou en cascade, ou même espacés les un des autres. Dans cette dernière variante, le processus de brisure des feuilles séchées peut être en chaîne ou en batch. Un processus en batch est séparé en plusieurs étapes indépendantes ou autonomes de brisure successive des feuilles en morceaux plus petits.

Dans une forme d'exécution, le premier organe briseur est amovible et comprend un rouleau entraîné en rotation par un moteur. Le rouleau peut comprendre des lignes actives avec une surface supérieure essentiellement cylindrique interrompue par des cavités configurées pour réceptionner des feuilles séchées, les lignes actives étant séparées par des cannelures entourant le rouleau. Les cavités comportent des surfaces radiales formant avec la surface supérieure des bords supérieurs, et les cannelures comportent des surfaces latérales formant avec les surfaces radiales des bords latéraux. La profondeur des cavités par rapport à la surface supérieure et la largeur des cavités, ainsi que la largeur des cannelures, peuvent avantageusement être différentes d'un dispositif briseur à l'autre, notamment en ce que la largeur des cavités et des cannelures diminue en taille d'un organe briseur en amont vers un organe briseur en aval.

Dans une forme d'exécution avantageuse, chacun des rouleaux est entraîné par un système d'entrainement contrôlé de manière à pouvoir varier la vitesse de chaque rouleau de la machine indépendamment. Le système d'entrainement peut avantageusement comprendre un moteur indépendant pour chaque rouleau.

Dans une forme d'exécution avantageuse, le deuxième organe briseur comprend une paroi briseuse comprenant des dents insérées dans les cannelures des rouleaux et des parties entre-dents au-dessus de la surface supérieure des rouleaux et espacées de cette surface par un jeu contrôlé. Des valeurs pour ce jeu peuvent se situer par exemple entre 0.001 mm et 1 mm.

Les dents, notamment du premier ou encore du deuxième dispositif briseur, peuvent avantageusement comprendre un bord d'attaque convexe, par exemple avec une forme en « V » avec un angle général α entre 80° et 160°.

La surface de fond des cannelures peut avantageusement être relevée par rapport à une surface de fond des cavités.

L'organe briseur statique peut être fixé à un guide d'entrée sous forme d'entonnoir pour guider les feuilles brisées sur la surface de l'organe briseur amovible.

Un angle θ de la paroi briseuse par rapport à un plan orthogonal à la surface du premier organe briseur peut se situer notamment entre -50° et +60°.

D'autres buts et aspects avantageux de l'invention ressortiront des revendications ou de la description détaillée d'une forme d'exécution ci-après en référence aux figures annexées, dans lesquelles :

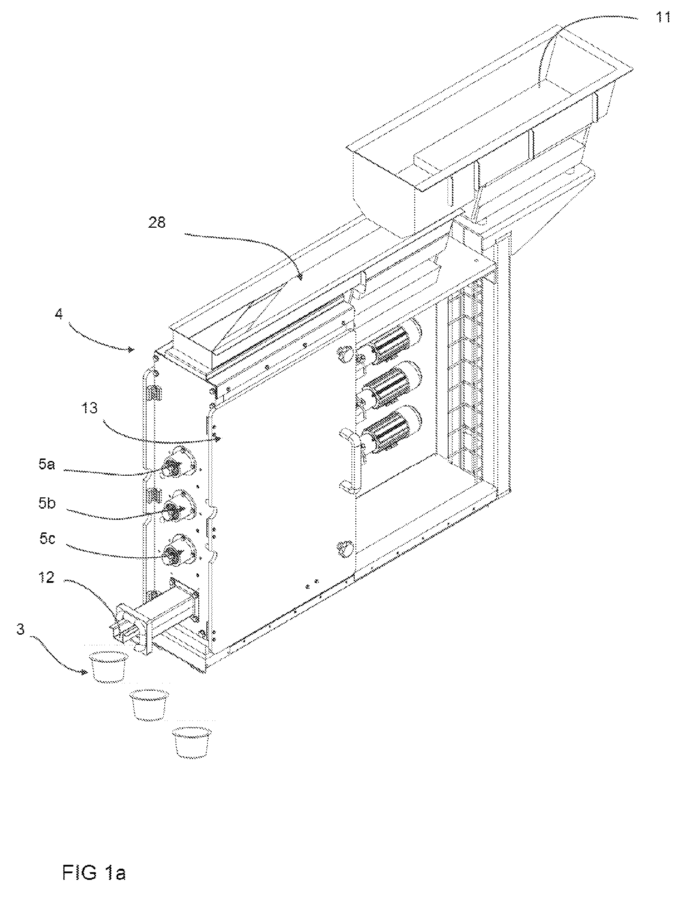

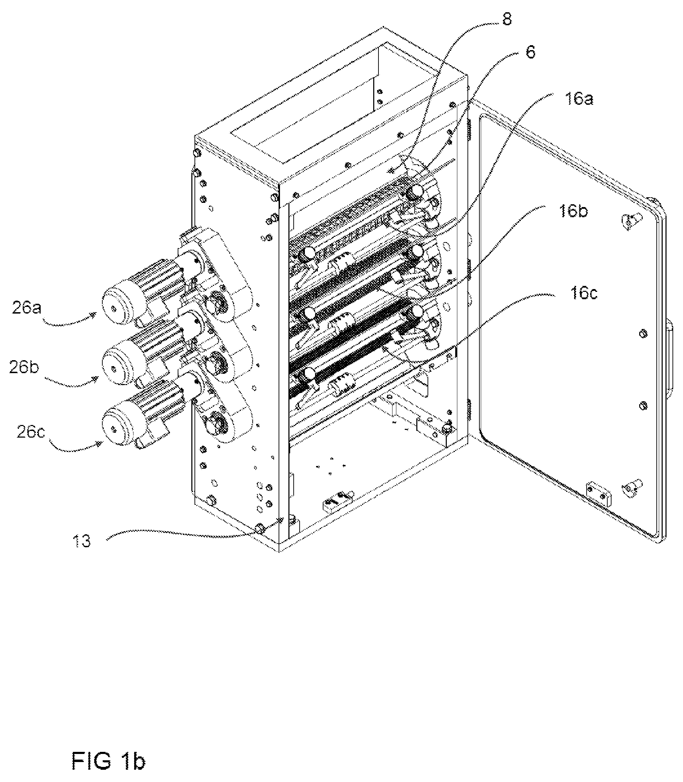

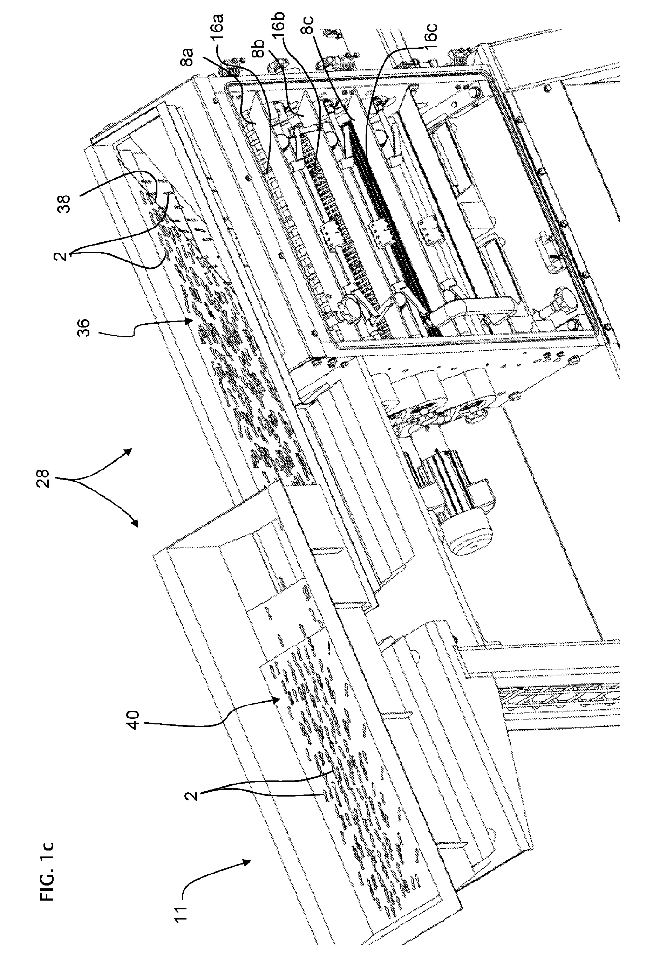

La Fig. 1 a est une vue en perspective d'une machine pour le conditionnement de feuilles séchées, notamment de thé, en capsules, selon une forme d'exécution de l'invention ;
La Fig. 1 b est une vue en perspective de la machine avec une partie de la structure extérieure enlevée pour mieux illustrer la machine ;
La Fig. le est une vue en perspective de la machine selon la figure la, montrant plus en détail un dispositif d'alimentation de la machine ;
La Fig. 2a est une vue en perspective d'une machine pour le conditionnement de feuilles séchées, notamment de thé, en capsules, selon une forme d'exécution de l'invention ;
La Fig. 2b est une vue de côté de la machine de la figure 2a ;
La Fig. 2c est une vue de face de la machine de la figure 2a
La Fig. 3 est une vue en perspective d'une partie de la machine de la figure 2a montrant un dispositif briseur vu du haut ;
La Fig. 4 est une vue de rouleaux d'un dispositif briseur vu du haut, d'une variante ;
La Fig. 5a est une vue en coupe détaillée et schématique d'un dispositif briseur d'une machine pour briser des feuilles séchées selon une forme d'exécution de l'invention ;
Les Fig. 5b et 5c illustrent des parties de variantes de rouleaux briseurs ;
La Fig. 5d est une illustration schématique montrant des dents d'une parois briseur engagent
   un rouleau briseur selon une variante ;
La Fig. 5e est une illustration schématique permettant d'identifier les dimensions des dents et des cannelures d'un dispositif briseur selon une variante ;
La Fig. 6a est une vue en perspective d'un rouleau d'un dispositif briseur d'une machine selon une forme d'exécution de l'invention ;
La Fig. 6b est une vue plan du rouleau de la figure 6a ;
La Fig. 6c est une vue dans la direction de l'axe de rotation du rouleau de la figure 6a ;
La Fig. 7a est une vue en perspective d'un rouleau briseur pour briser des feuilles en plus petits morceau que le rouleau briseur de la figure 6a ;
La Fig. 7b est une vue plan du rouleau de la figure 7a ;
La Fig. 7c est une vue dans la direction de l'axe de rotation du rouleau de la figure 7a ;
La Fig. 8a est une vue en perspective d'un rouleau d'un dispositif briseur d'une machine selon une autre forme d'exécution de l'invention ;
La Fig. 8b est une vue plan du rouleau de la figure 8a ;
La Fig. 8c est une vue dans la direction de l'axe de rotation du rouleau de la figure 8a.
La Fig. 9a est une vue en perspective d'une paroi briseuse d'une machine selon une forme d'exécution de l'invention ;
La Fig. 9b est une vue plan de la paroi de la figure 9a ;
La Fig. 9c est une vue dans la direction de la flèche C de la figure 9b ;
La Fig. 9d est une vue dans la direction de la flèche D de la figure 9b ;

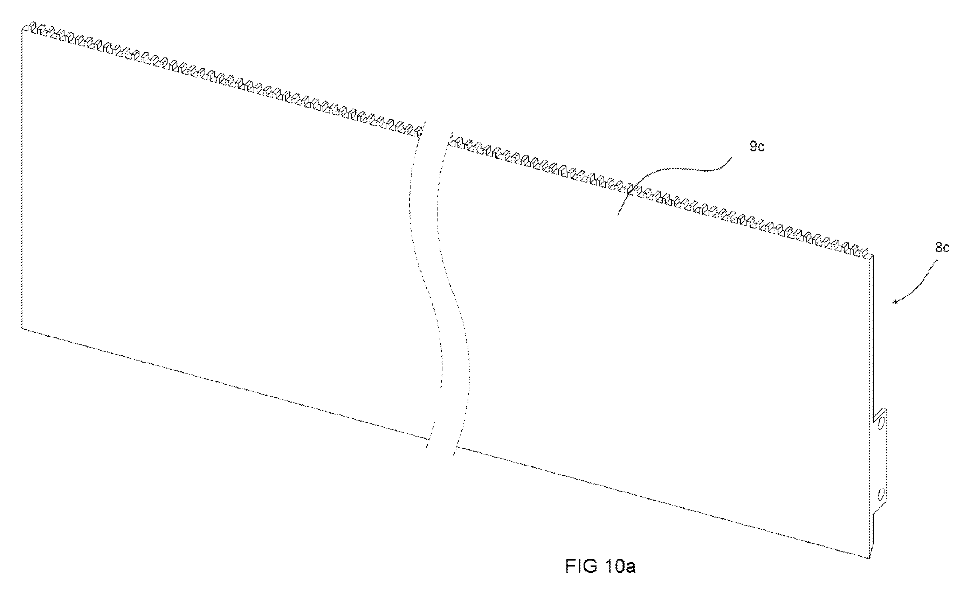

La Fig. 10a est une vue en perspective d'une paroi briseuse pour briser des feuilles en plus petits morceau que la paroi briseuse de la figure 9a ;

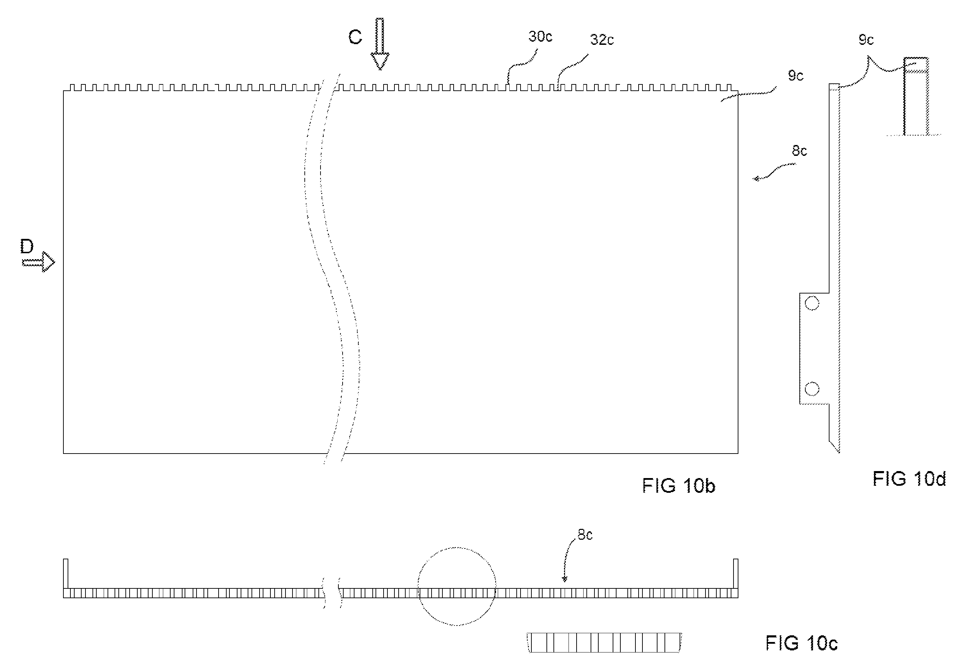

La Fig. 10b est une vue plan de la paroi briseuse de la figure 10a ;
La Fig. 10c est une vue dans la direction de la flèche C de la figure 10b ; et
La Fig. 10d est une vue dans la direction de la flèche D de la figure 10b ;

La Fig. 1 a est une vue en perspective d'une machine 4 pour briser des feuilles séchées de plantes et plus particulièrement des feuilles de thé séchées, la machine faisant partie d'un système 1 pour le conditionnement des feuilles, et notamment de thé, dans une capsule 3 hermétique. La machine comprend une entrée 11 pour une alimentation en feuilles séchées, une sortie 12 pour la sortie des feuilles brisées et de guidage dans la capsule, et au moins un dispositif briseur 5a, 5b, 5c.

Dans la forme d'exécution illustrée, la machine 4 comprend une pluralité de dispositifs briseurs montés l'un sur l'autre verticalement. Il est également possible de disposer les dispositifs briseurs l'un à côté de l'autre horizontalement ou à différentes positions et d'avoir un mécanisme de transport, tel qu'un tapis convoyeur, pour transporter les feuilles d'un dispositif à l'autre.

Dans une forme d'exécution avantageuse, il y a trois dispositifs briseurs 5a, 5b, 5c.

Les dispositifs briseurs peuvent être montés dans une armoire 13, au moins en partie, l'intérieur de l'armoire étant alimenté par un gaz neutre, tel que de l'azote, afin d'éviter une oxydation des feuilles ou brindilles lors de la procédure de brisure jusqu'à leur insertion dans la capsule. Le gaz neutre enrobe les dispositifs briseurs et tout le parcours de la feuille ou brindille brisée jusque dans la capsule. Les capsules 3 sont donc également remplies d'un gaz neutre avant d'être scellées hermétiquement, cela permettant non seulement d'éviter l'oxydation des feuilles ou brindilles lors de la brisure et après brisure, mais également de préserver leur propriétés organoleptiques ainsi que de prévenir une activité microbienne. La machine 4 peut aussi être installée dans un sas avec un environnement contrôlé, notamment avec un gaz neutre tel que de l'azote remplissant le sas.

Dans une forme d'exécution, chaque dispositif briseur 5 comprend un organe briseur amovible
6 et un organe briseur statique 8.

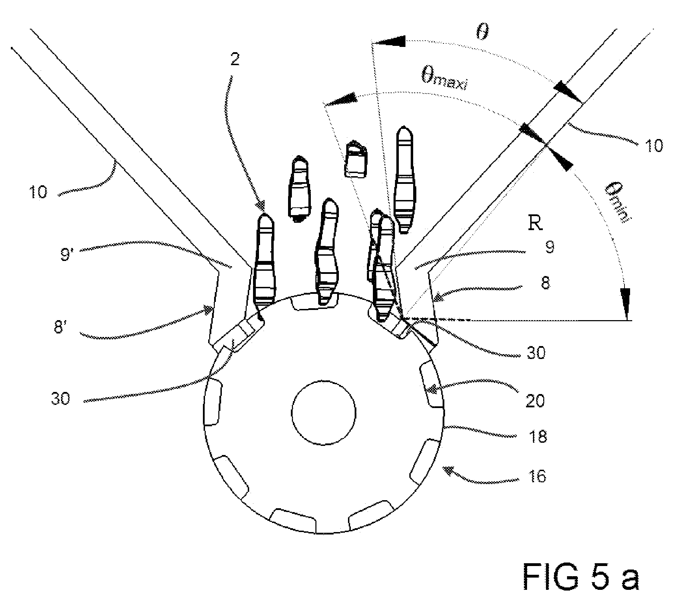

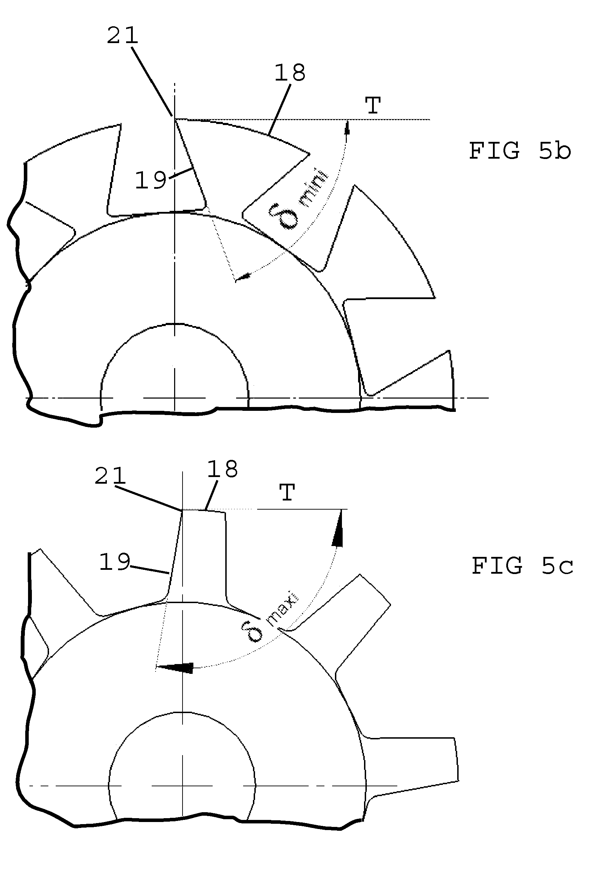

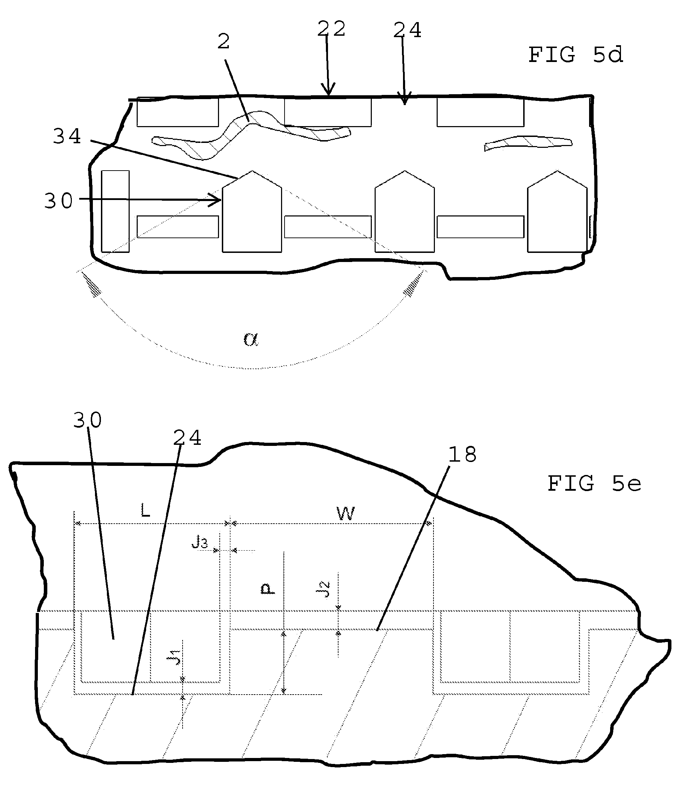

Dans une forme d'exécution avantageuse, l'organe briseur amovible 6 comprend un moteur 26 entraînant en rotation un rouleau 16a, 16b, 16c. Le rouleau comprend des lignes actives 22 avec une surface supérieure 18 cylindrique interrompue par des cavités 20, configurée pour réceptionner des feuilles 2 partiellement, tel qu'illustré dans la Fig. 5. Il y a une pluralité de lignes actives séparées par des cannelures 24 entourant le rouleau. Les cavités ont une surface de fond 17 et des surfaces radiales 19 formant avec la surface supérieure 18 des bords supérieurs 21. Les cannelures 24 ont une surface de fond 23 et des surfaces latérales 25 formant avec les surfaces radiales 19 des cavités 20 des bords latéraux 27.

Chacun des rouleaux peut avantageusement être entraîné par un moteur 26a, 26b, 26c contrôlé indépendamment afin de pouvoir varier la vitesse de chaque rouleau de la machine indépendamment. En effet, la vitesse de rotation des rouleaux peut être déterminée empiriquement en fonction du type de feuille séchée à briser, par exemple du thé, mais également en fonction des différences au sein d'un même type de produit. Ces différences peuvent être de morphologie des feuilles séchées d'origine différente, ainsi que du taux d'humidité et de résistance à la cassure. Il est toutefois possible dans des variantes d'avoir un ou plusieurs moteurs travaillant à vitesse constante et d'avoir une boîte à vitesse ou système de couplage à vitesse variable et contrôlable couplant le moteur ou les moteurs aux rouleaux.

La profondeur Pa, Pb, Pc des cavités 20 par rapport à la surface supérieure 18 et la largeur La, Lb, Lc des cavités, ainsi que la largeur Wa, Wb, Wc des cannelures peut avantageusement être différente d'un dispositif briseur à l'autre. La largeur des cavités et des cannelures de l'organe briseur amovible du premier dispositif (l'organe supérieure) 6a sont plus grandes que celles du deuxième organe briseur amovible (l'organe intermédiaire) 6b qui sont plus grandes que celles du troisième organe briseur amovible (l'organe inférieur) 6c. La diminution des dimensions tient compte du fait que les feuilles de thé séchées sont brisées au fur et à mesure qu'elles passent du rouleau briseur au-dessus à celui en-dessous et diminuent en taille. La partie supérieure de la feuille (non encore brisée) doit de préférence rebondir « seule » et retomber pour être fracturée sans effet d'écrasement entre les dents du rouleau et la tôle, rompant la feuille par flexion uniquement.

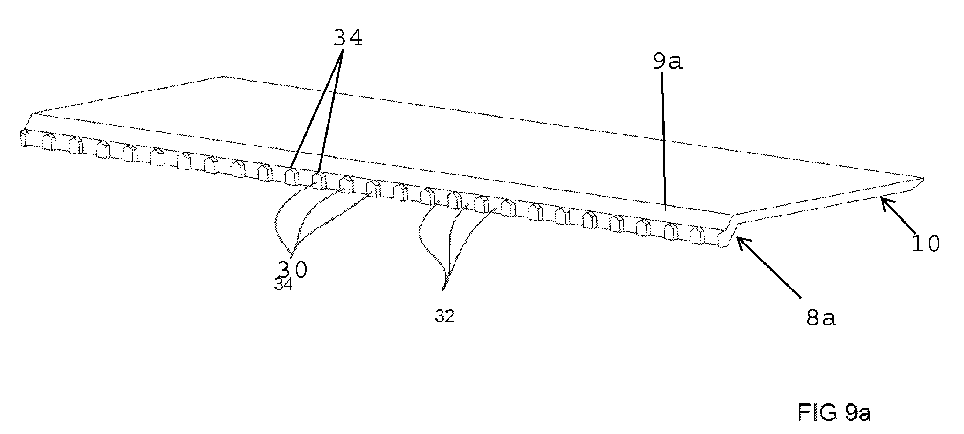

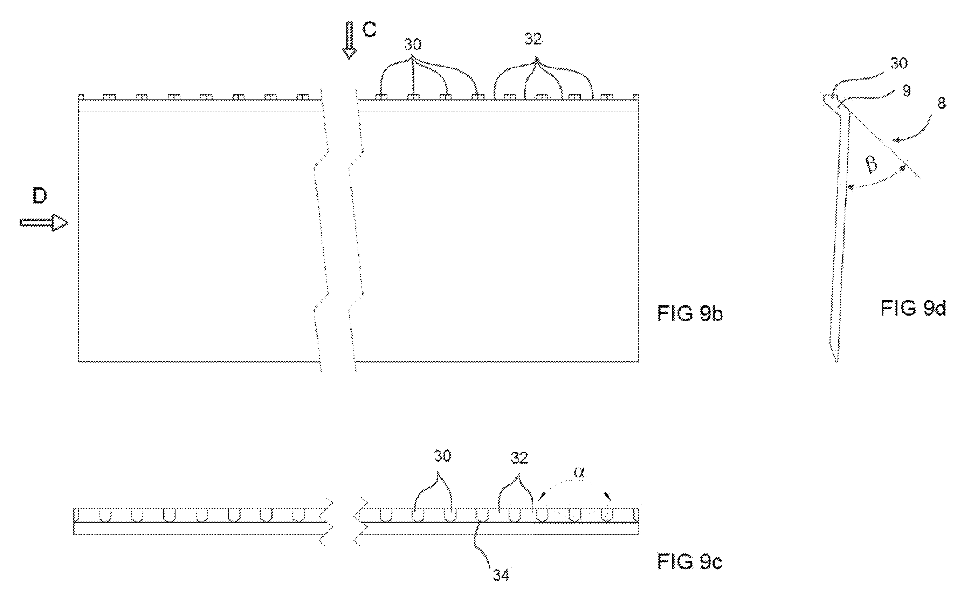

L'organe briseur statique 8, 8a, 8b, 8c comprend une paroi briseuse 9, 9a, 9b, 9c comprenant des dents 30, 30a, 30c insérées dans les cannelures 24 entre les lignes 22 et des parties entre-dents 32, 32a, 32c juste au-dessus de la surface supérieure et espacées de cette surface par un jeu déterminé et contrôlé. Les parties entre-dents 32 permettent de briser les bouts de feuilles de thé séchées projetant radialement au-delà des bords supérieurs 21 des cavités 20. Les dents 30 permettent de briser les bouts de feuilles de thé séchées 2 projetant latéralement des cavités 20 au-delà des bords latéraux 27. Les dents 30 sont aussi configurées pour pousser les feuilles tombant dans les cannelures 24 latéralement pour qu'elles engagent les bords latéraux 27 des cavités 20. A cet effet, les dents 30 peuvent avantageusement avoir un bord d'attaque 34 avec une forme convexe, par exemple en « V » (voir figures 5d, 9a, 9c), pour ramasser et pousser latéralement les feuilles de sorte à ce qu'elles tendent à s'engager avec un bout partiellement dans les cavités 20. Pour le premier rouleau 6a et le deuxième rouleau 6b, le bord d'attaque en « V » peut avoir un angle général α de préférence entre 80° et 160°, par exemple entre 110° et 130°. La surface de fond 25 de la cannelure 24 peut être, selon une variante, relevée par rapport à la surface de fond 17 des cavités, en d'autres termes à une profondeur moyenne par rapport à la surface supérieure 18, plus faible que la profondeur Pa, Pb, Pc des cavités 20. Cela permet de faciliter l'engagement des feuilles en partie dans les cavités 20 en les aidants à tomber dans les cavités. Le profil de la surface de fond 25 de la cannelure 24, vu dans une coupe longitudinale contenant l'axe de rotation A du rouleau, peut être essentiellement rectiligne, tel que illustré, ou légèrement convexe pour faciliter le glissement ou projection des feuilles de thé tombant dans les cannelures vers les cavités 20.

L'organe briseur statique 8 peut être formé intégralement ou fixé à un guide d'entrée 10 sous forme d'entonnoir pour guider les feuilles de thé brisées sur la surface de l'organe briseur amovible 6a, 6b, 6c, et pour des feuilles de thé giclées dans l'air lors de leur cassure, de les rediriger vers la surface de l'organe briseur amovible.

Dans un procédé avantageux, les feuilles ou brindilles séchées, entières ou essentiellement entières sont alimentées sur le premier rouleau 6a par un dispositif d'alimentation 28 configuré pour générer une pluie de feuilles distribuées de manière pas trop dense sur la surface de l'organe briseur amovible entre les parois d'entrée 10, et notamment entre les parois briseurs 9, la pluie régulière et fine de feuilles séchées s'étendant sur toute la longueur du premier organe briseur. Les feuilles tombent de manière non-groupées sur la surface dudit premier organe briseur de sorte à ce qu'il n'y a de préférence qu'une feuille à la fois dans chaque cavité 20, mais au maximum deux voir trois. Le dispositif d'alimentation peut comprendre une grille ou autre plateau vibrant permettant de libérer les feuilles les unes des autres et générer une pluie régulière et fine de feuilles séchées. En effet, si la densité de feuilles tombant sur le premier organe briseur amovible 6a est trop élevée, les cavités 20 peuvent être bouchées et une brisure optimale des feuilles ne se réalisera pas. Même si les cavités 20 ne se bouchent pas, une brisure optimale est réalisée lorsque seulement une, voire deux ou trois feuilles, se trouvent dans une cavité 20 pour éviter un empilement et une compression de feuilles entre les bords supérieurs 21 et latéraux 27 de la cavité 20 et l'organe briseur statique 8 au moment du croisement des bords avec l'organe briseur statique, ce qui pourrait diminuer l'efficacité de la brisure. Une feuille rebondit typiquement plusieurs fois sur l'organe briseur. Une brisure des feuilles par écrasement ou cisaillement émet de l'énergie thermique néfaste pour les propriétés de la surface exposée après brisure, alors qu'une brisure de chaque feuille individuellement par flexion, comme dans la présente invention, permet d'effectuer une brisure avec une très grande surface exposée et une émission minimale d'énergie thermique.

Pour éviter l'empilement, et donc l'écrasement de la partie supérieure de la feuille (soit au- dessus de la partie en train d'être brisée), celle-ci doit rester « isolée », d'où l'importance du réglage optimal de la « pluie de feuilles ». Cette dernière peut être réglée manuellement par l'opérateur (optimum entre vitesse des rouleaux, celle des vibreurs de distribution, et l'effet pluie) ou selon des paramètres établies par des tests auparavant en fonction du type de feuille et de son humidité. Il y a donc un avantage à ce que la vitesse de chaque rouleau peut être réglée de manière indépendante par rapport aux autres rouleaux. Comme mentionné, des différences d'humidité ou de résistance à la cassure influent sur le réglage de la vitesse. Une feuille rebondit plusieurs fois, et sur plusieurs rouleaux.

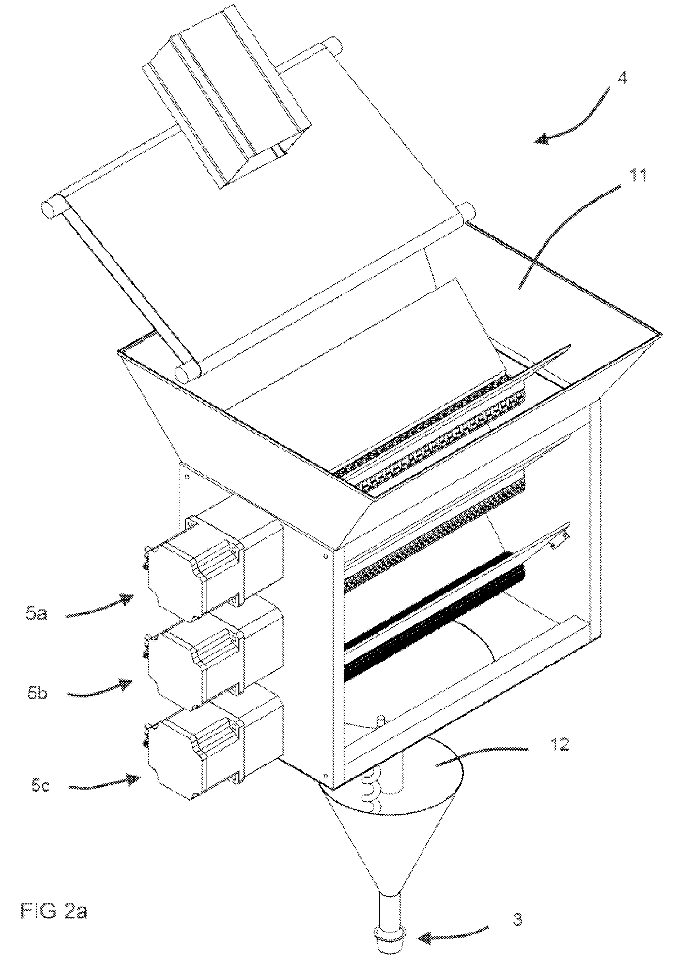

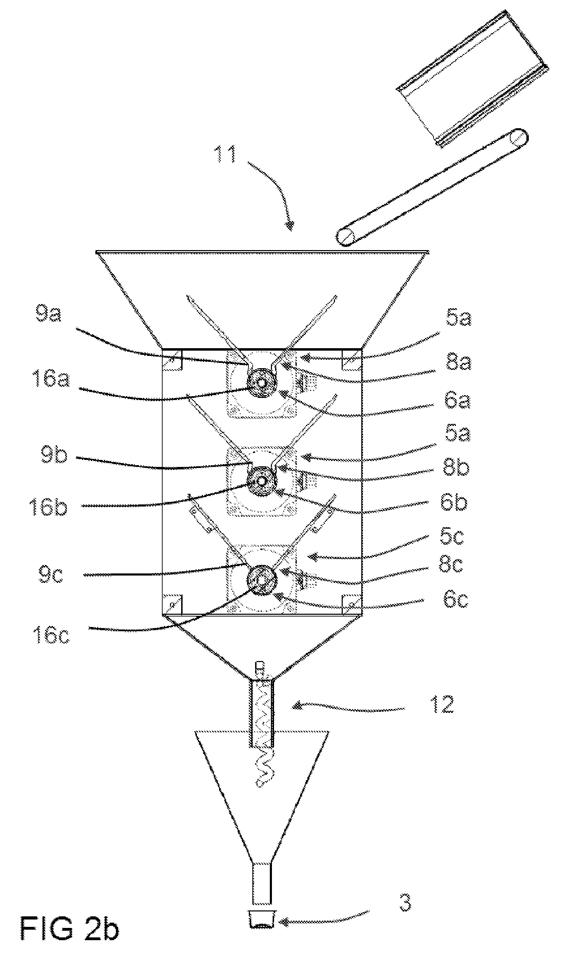

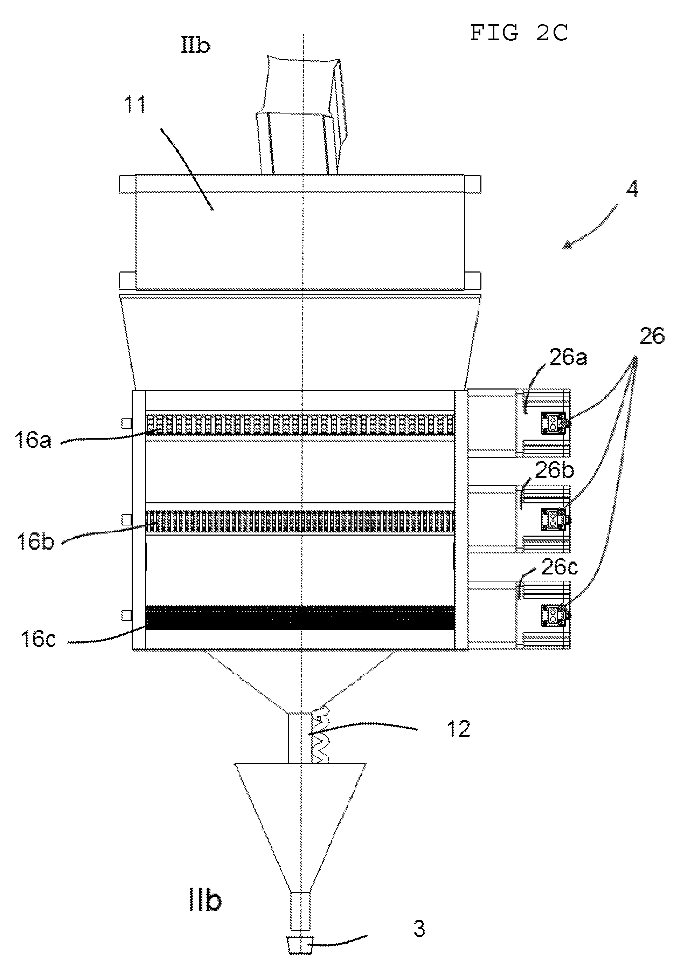

Faisant référence aux figures 1a et 1c, le dispositif d'alimentation 28 selon une forme d'exécution avantageuse comprend un plateau vibrant 36 avec un bord déversoir 38 s'étendant sur toute la longueur du premier rouleau et disposé au-dessus du premier rouleau 16a. Dans la forme d'exécution illustrée, l'alimentation des feuilles étant orientée suivant l'axe du rouleau briseur, le bord déversoir a un angle oblique par rapport à l'axe de sorte à ce que le bord s'étend sur toute la longueur du rouleau. On peut toutefois aussi avoir une alimentation des feuilles selon une direction transversale à l'axe de rotation du rouleau briseur, comme c'est le cas par exemple dans le dispositif d'alimentation illustré dans la figure 2a.

Le dispositif d'alimentation 28 peut en outre comprendre un ou plusieurs plateaux vibrants 40 en amont du plateau vibrant 36, ces plateaux vibrants en amont servant à désentasser et séparer les feuilles ou brindilles séchées avant leur alimentation sur le plateau vibrant 36. Cet arrangement permet de bien contrôler et régler la répartition et l'espacement optimal des feuilles ou brindilles avant leur arrivée au bord de déversoir 38 de sorte que la pluie de feuilles sur le premier dispositif briseur est fine et configurée pour qu'une seule feuille ou brindille à la fois tombe dans une cavité du dispositif briseur.

Faisant référence à la figure 5a, l'angle θ de la paroi briseuse 8 par rapport au à la direction radiale R, au point d'intersection de la paroi briseuse avec la surface supérieure 18 du rouleau, peut se situer notamment entre - 50° (θ min) et +60° (θ max). Faisant référence aux figures 5b et 5c, l'angle δ entre la surface radiale 19 des cavités 20 et le plan tangente T à la surface supérieure 18 peut se situer notamment entre 30° et 125°. L'angle δ peut varier en fonction de l'angle θ puisque ces deux angles influence la position des points d'appui appliqués sur une feuille séchée coincée entre la paroi briseuse 9 et la dent 30 d'un côté, et le bord supérieure 21 de la surface radiale 19 de l'autre côté, ainsi que l'espace libre permettant la flexion de la feuille. Ce que l'on vise c'est de privilégier la rupture de la feuille par flexion par rapport à une rupture par cisaillement nette ou à une mouture ou écrasement des feuilles.

Faisant référence à la figure 5e, les jeux j1, j2, j3 entre l'extrémité 30 de la paroi briseuse et la surface supérieure 18 de la ligne 22 de l'organe briseur amovible se situent de préférence entre 0.001 mm et 1.8 mm.

L'angle θ de la paroi briseuse 9, l'angle α du bord d'attaque des dents, ainsi que le jeu j1, j2, j3 et les dimensions des cavités 20 et des cannelures 24 sont configurés pour qu'une feuille de thé 2 tombant dans la cavité 20 soit coincée entre la paroi briseuse et le bord supérieur 21 ou le bord latéral 27 de la cavité 20 et pliée jusqu'à sa brisure lorsque le rouleau 6 tourne et la cavité se déplace au niveau de la paroi briseuse 9. La brisure d'une feuille se caractérise par une rupture soudaine et irrégulière de la feuille, notamment par flexion de la feuille séchée jusqu'à sa rupture, se distinguant d'une coupure ou un cisaillement nette ou un écrasement ou mouture de la feuille.

Dans le système selon la forme d'exécution de l'invention décrit ci-dessus, l'on évite de moudre ou de couper ou cisailler les feuilles nettement. D'une part la surface effective exposée d'une feuille brisée étant irrégulière et rugueuse, elle est nettement plus grande que pour une feuille coupée. Très avantageusement, la cassure des feuilles de thé par flexion dans un environnement non-oxydant, à savoir sans oxygène, évite l'oxydation de la surface et offre une très grande capacité de la feuille à absorber de l'eau très rapidement pour pouvoir extraire les substances du thé pour la préparation d'une boisson. Non seulement on peut extraire ces substances très rapidement, mais en plus les arômes subtils sont préservés en évitant une oxydation des surfaces exposées lors de la brisure par flexion des feuilles. Par ailleurs, la surface d'une feuille de thé coupée ou moulue subit un fort échauffement local qui a pour effet de cicatriser la surface coupée ou moulue et de réduire sa capacité à absorber de l'eau rapidement et à libérer rapidement les substances solubles contenues dans la feuille de thé. La brisure par flexion génère moins d'énergie thermique à la surface brisée, et par conséquence cette surface reste plus poreuse à l'absorption de l'eau et à la libération des produits solubles. Aussi, en évitant un échauffement local à la surface brisée, on altère moins les arômes du thé.

Les feuilles de thé de différentes régions ont des propriétés mécaniques et des dimensions ainsi que des taux d'humidité différents, de sorte que les paramètres nécessaires pour briser les feuilles de manière optimale peuvent varier. A cet effet, la machine 4 dispose d'un système d'entraînement configuré pour contrôler la vitesse de rotation des organes briseurs amovibles, de préférence pour contrôler la vitesse de rotation de chacun des organes briseurs indépendamment. Le système d'entraînement peut comprendre un ou plusieurs moteurs et éventuellement un ou plusieurs mécanismes tels qu'une ou plusieurs boites à vitesse pour contrôler les vitesses de rotation. Dans la variante illustrée, la machine 4 comprend des moteurs 26a, 26b, 26c pour l'entraînement des organes briseurs amovibles 6a, 6b, 6c contrôlés indépendamment. La vitesse de chaque rouleau briseur est contrôlée par la vitesse de chaque moteur correspondant couplé au rouleau respectif. La vitesse optimale pour chacun des rouleaux briseurs peut être déterminée pour chaque type de thé par des mesures empiriques. Par exemple, les feuilles de thé très sèches et très cassantes peuvent être brisées avec des vitesses de rotation des rouleaux 16a, 16b, 16c plus rapides que pour des feuilles plus élastiques et moins cassantes. Aussi, l'on peut varier l'angle θ de la paroi ainsi que le jeu entre la surface supérieure et la partie entre-dent de la paroi briseuse pour s'adapter à l'élasticité, aux dimensions, à la densité, l'humidité et d'autres caractéristiques des feuilles de thé. L'on peut également remplacer les parois briseurs et les rouleaux pour changer les dimensions et angles des cannelures, cavités et dents, pour s'adapter aux dimensions et propriétés mécaniques du type des feuilles que l'on souhaite conditionner dans les capsules.

La vitesse des rouleaux briseurs peuvent aussi dépendre de la vitesse d'alimentation des feuilles séchées par le dispositif d'alimentation en amont, afin d'éviter un tassement de plusieurs feuilles dans les cavités des rouleaux. Dans l'idéal, on cherche à limiter la réception dans chaque cavité des rouleaux briseurs d'une seule feuille à la fois pour une brisure par flexion optimale, sans écrasement. Les vitesses optimales des rouleaux briseurs, qui sont fonction notamment des caractéristiques des feuilles à conditionner et de la vitesse d'alimentation, peuvent être ajustées empiriquement en effectuant des analyses sur les feuilles brisées sortant de la machine.

Quand les feuilles ou brindilles séchées 2 tombent dans les cavités, les parties qui s'étendent de la cavité au-delà de la surface supérieure 18, ou latéralement au-delà du bord, sont brisées lorsqu'elles s'engagent sur la paroi briseuse. Une partie d'une feuille ou brindille brisée reste probablement dans la cavité et l'autre partie est probablement projetée dans l'air pour ensuite retomber sur la surface de l'organe briseur amovible. Si la partie projetée est toujours plus longue que la profondeur ou la largeur de la cavité 20, elle peut subir une nouvelle brisure. Pour la partie de feuille ou brindille brisée restant dans la cavité 20 lors du passage de la cavité sous la paroi briseuse 9, cette partie de feuille ou brindille tombe de la cavité dans le guide d'entrée 10b de l'organe briseur placé dessous pour une opération de brisure subséquente en plus petits morceaux. Par la pluralité d'organes briseurs amovibles disposés l'un sur l'autre, on peut donc exécuter une pluralité d'opérations de brisure de feuilles de thé en de plus petits morceaux à chaque opération afin de conditionner de petits morceaux d feuilles de thé brisées formant une très grande surface d'absorption non oxydée. Cela permet de diminuer le temps d'extraction des substances contenues dans le thé ou autre plante alimentaire en moins de 30 secondes comparé à un temps d'extraction de plusieurs minutes pour un procédé de préparation de thé conventionnel. Aussi, on obtient une extraction de substances de plus grande qualité organoleptique que celle que l'on peut obtenir avec des feuilles de thé classiques ou d'autres plantes alimentaires. Dans une variante, l'on peut également monter les dispositifs briseurs horizontalement, l'un à côté de l'autre, ou espacés, en transportant les feuilles ou brindilles brisées d'un dispositif à l'autre avec un moyen de transport, tel qu'un convoyeur, une plaque vibrante ou un système de gaz soufflé.

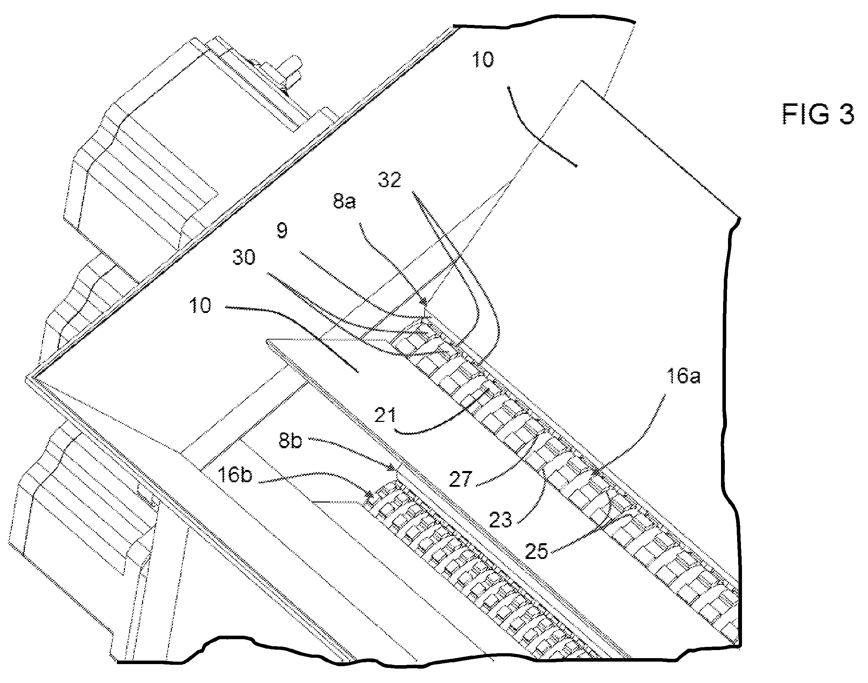

Les cavités 20 peuvent avoir des lignes actives et cannelures orthogonales à l'axe de rotation
A tel qu'illustré à la figure 3, mais dans une variante (non-illustrée) les lignes actives et cannelures peuvent former une hélice autour du rouleau.

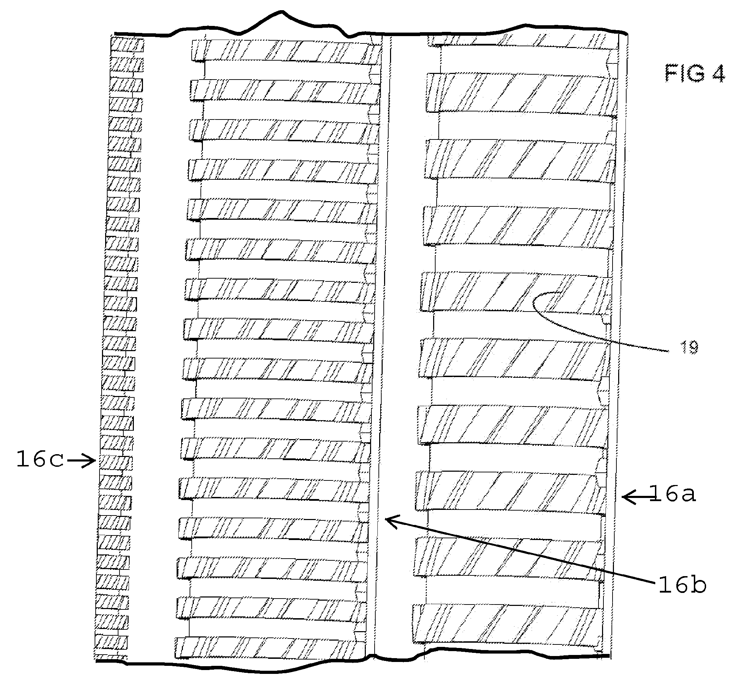

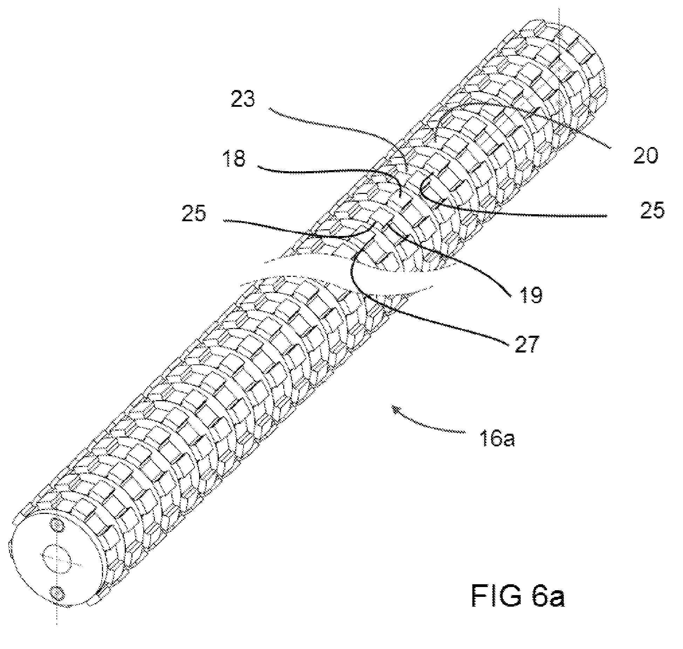

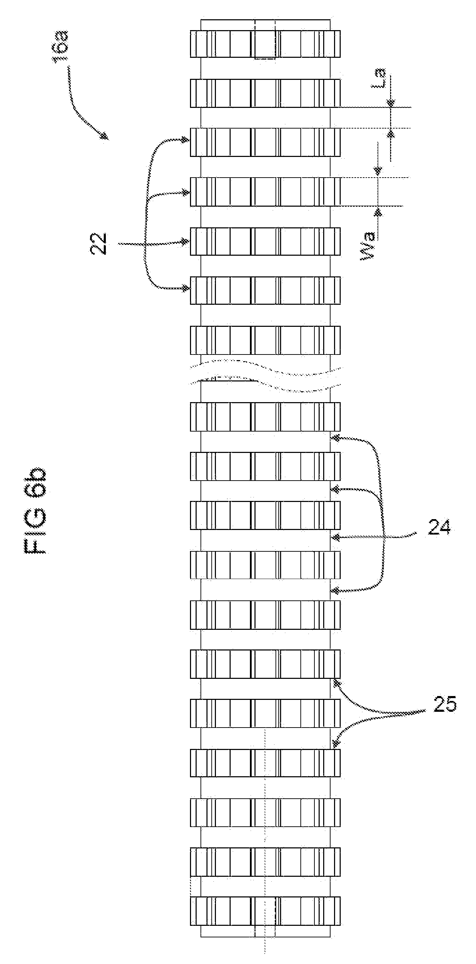

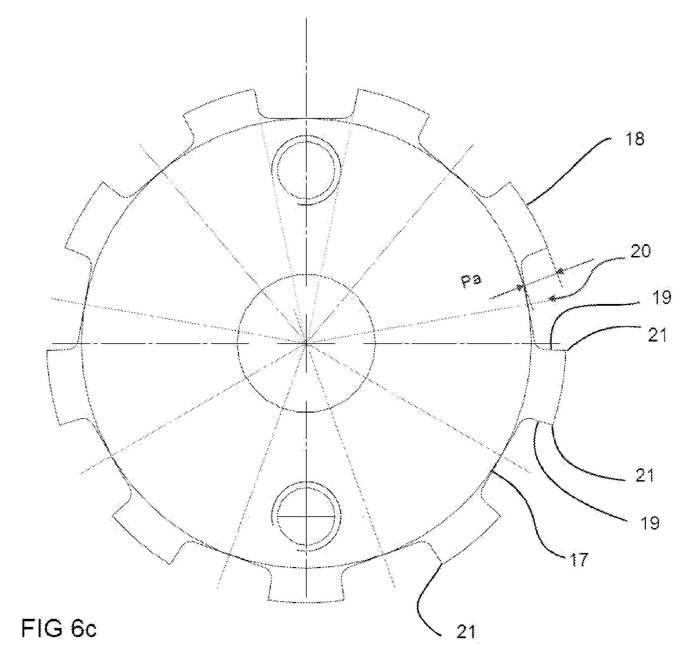

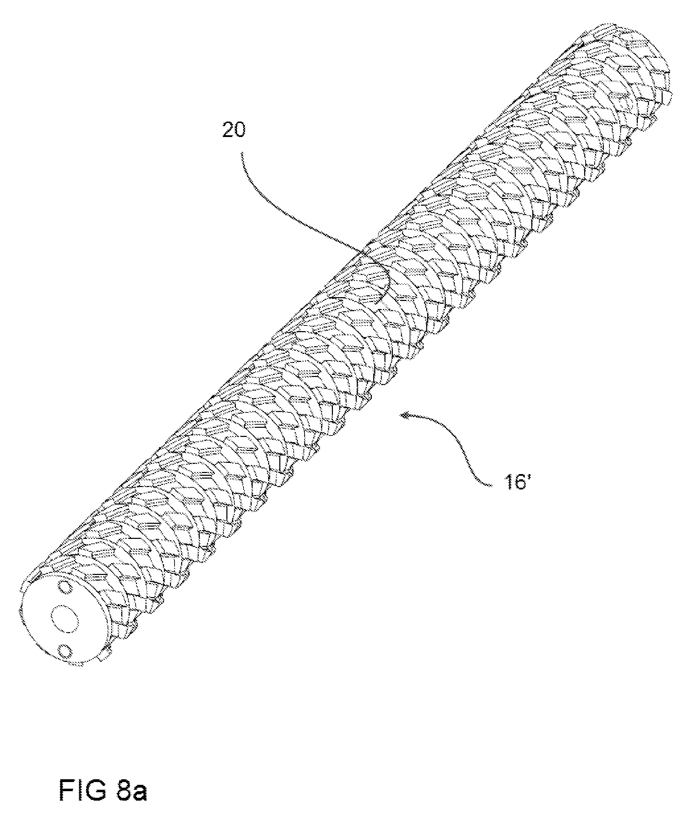

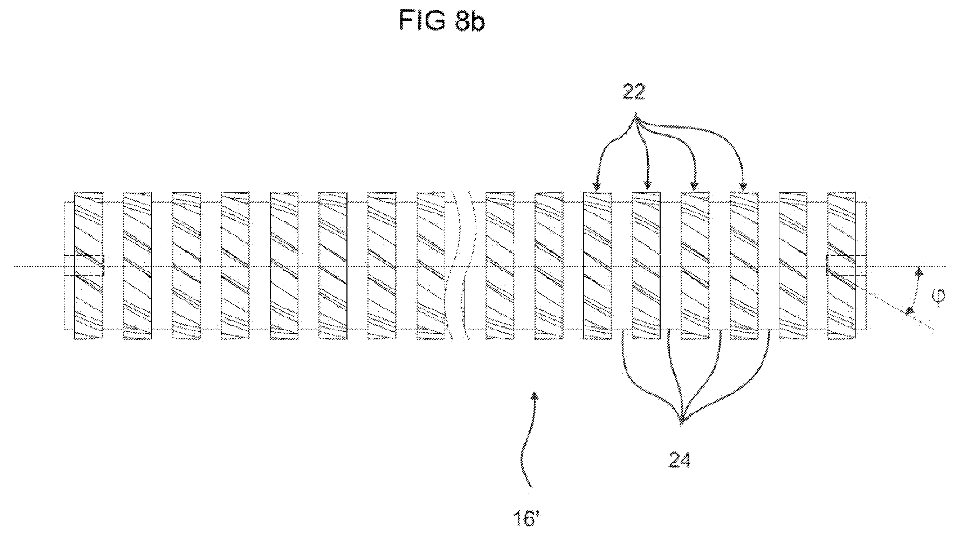

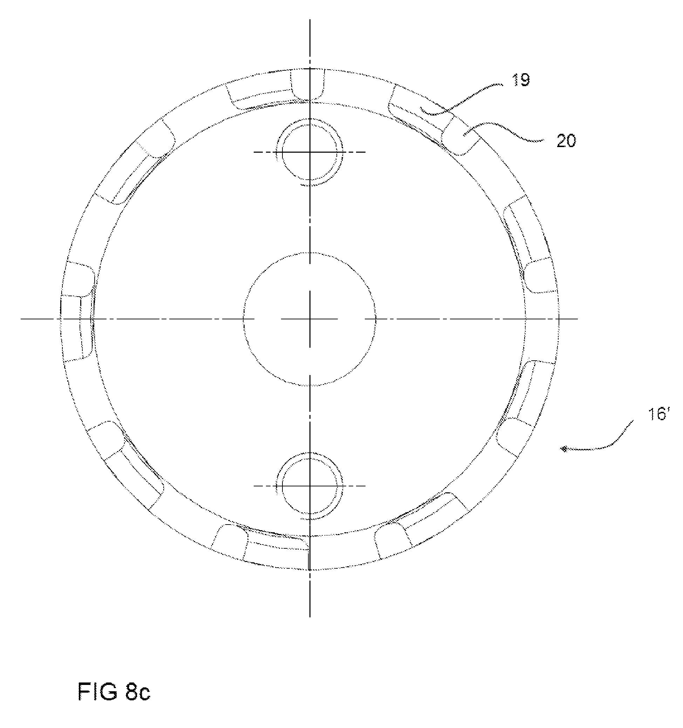

Les parois radiales 19 des cavités 20 de part et d'autre sont dans une variante essentiellement parallèle à l'axe de rotation des rouleaux, tel qu'illustré dans la forme d'exécution des figures 3 et 6a à 6c. Dans une autre variante, les parois 19 peuvent être inclinées, c'est-à-dire avoir un angle oblique ϕ par rapport à la direction de l'axe de rotation, tel qu'illustré dans les figures 4 et 8a à 8c, l'angle oblique ϕ étant de préférence entre 10° et 35° par rapport à la direction de l'axe de rotation.

Restant dans l'esprit de l'invention, un procédé pour briser les feuilles ou brindilles séchées de thé ou d'autres plantes peut être effectué par d'autres formes d'exécution d'organes briseurs que ceux illustrés. Au lieu d'un rouleau, l'organe briseur amovible peut être par exemple sous forme d'un organe essentiellement plat muni de cavités et oscillant en translation relative à une paroi briseuse. Les organes briseurs pourraient aussi être sous forme d'une paire de plaques ondulées ou en dents de scie complémentaires ou comprenant des cavités et protubérances complémentaires, les feuilles de thé séchées étant reçues dans les cavités d'une des plaques et les protubérances de l'autre plaque s'insérant dans les cavités pour plier les feuilles jusqu'à la rupture, en privilégiant une rupture par flexion sur une rupture par cisaillement net ou une mouture des feuilles. Il est également envisageable que les deux organes briseurs soit amovibles.

### Exemple :

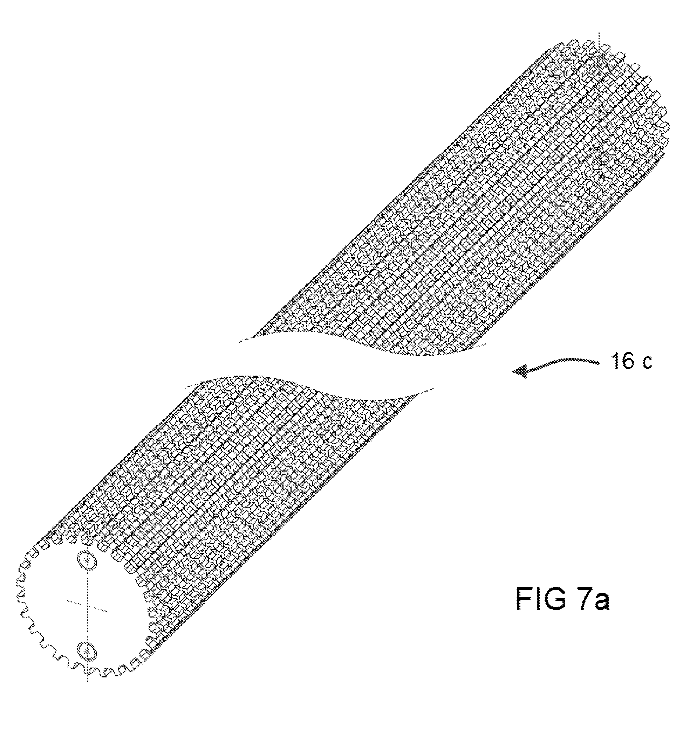

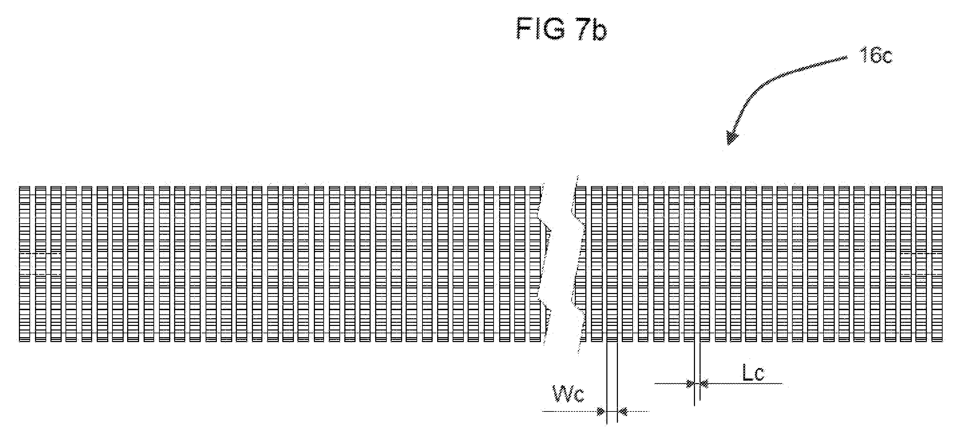

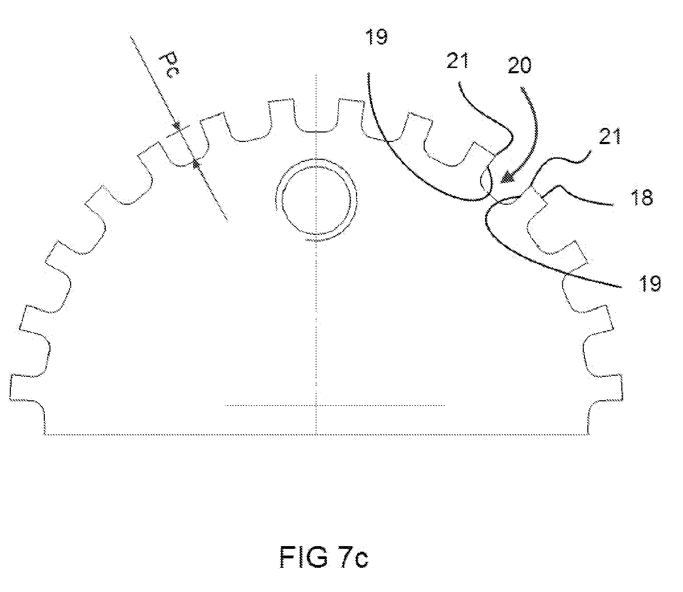

Un exemple d'une configuration spécifique des parois briseurs et rouleaux basée sur une forme d'exécution telle que illustrée dans les figures 1 a à 2c pour le conditionnement de feuilles séchées de thé, peut avoir des paramètres (montrés dans les figures 5a-5e, 6b, 6c, 7b, 7c) avec des valeurs situées autour des valeurs suivantes :

| Paramètre | Premier Rouleau : | Deuxième Rouleau : | Troisième Rouleau : |
|---|---|---|---|
| α | 120° | 120° | 120° |
| θ | 45° | 45° | 45° |
| δ | 90° | 90° | 90° |
| W | 11.8 mm | 4.3 mm | 2.8 mm |
| P | 3mm | 3mm | 2.5 mm |
| L | 6.7 mm | 4.7 mm | 1.7 mm |
| J1 | 1.5 mm | 1.4 mm | 1.3 mm |
| J2 | 1.5 mm | 1.4 mm | 1.3 mm |
| J3 | 0.1 mm | 0.1 mm | 0.1 mm |

## Revendications

1. Système (1) pour le conditionnement de feuilles ou brindilles séchées de plantes dans une capsule (3) hermétique, incluant une machine (4) pour briser des feuilles séchées, la machine comprenant une entrée (11) pour une alimentation en feuilles ou brindilles séchées, une sortie (12) pour la sortie des feuilles ou brindilles séchées brisées, et au moins un dispositif briseur (5a, 5b, 5c) comprenant un premier organe briseur (6) et un deuxième organe briseur (8) relativement amovible par rapport au premier organe briseur, les premier et deuxième organes briseurs étant configurés pour fléchir des feuilles ou brindilles séchées jusqu'à leur rupture par flexion, **caractérisé en ce que** la machine comprend une source de gaz neutre configurée pour alimenter l'environnement dans la machine, y compris ledit au moins un dispositif briseur, afin d'éviter une oxydation des feuilles ou brindilles lors de la procédure de brisure jusqu'à leur insertion dans la capsule.

2. Système (1) selon la revendication 1, **caractérisé en ce que** la machine comprend une pluralité de dispositifs briseurs de dimensions différentes configurées pour un traitement de brisure des feuilles ou brindilles séchées en morceaux successivement plus petit, de préférence la machine comprend au moins trois dispositifs briseurs.

3. Système (1) selon l'une des revendication 1 ou 2, **caractérisé en ce que** le premier organe briseur comprend un rouleau (16, 16') avec une surface supérieure et avec des cannelures (24) entourant le rouleau et **en ce que** le deuxième organe briseur comprend une paroi briseuse (9) comprenant des dents (30) insérées dans les cannelures (24) et des parties entre-dents (32) au-dessus de la surface supérieure et espacées de cette surface par un jeu contrôlé, les dents (30) comprennent un bord d'attaque (34) avec une forme convexe.

4. Système (1) selon l'une des revendications 1 à 3 **caractérisé en ce que** les dispositifs briseurs sont montés l'un sur l'autre dans le sens de la force de gravité.

5. Système (1) selon l'une des revendications 1 à 4, **caractérisé en ce que** le système comprend en outre un dispositif d'alimentation (28) disposé au-dessus dudit au moins un dispositif briseur, configuré pour générer une pluie de feuilles ou brindilles distribuées tombant de manière non-groupées sur la surface dudit premier organe briseur.

6. Système selon la revendication 5, **caractérisé en ce que** le dispositif d'alimentation comprend une grille ou plateau vibrant (36) permettant de générer une pluie régulière et fine de feuilles ou brindilles séchées s'étendant sur toute la longueur du premier organe briseur.

7. Système selon l'une des revendication 5 ou 6 **caractérisé en ce que** le dispositif d'alimentation comprend un ou plusieurs grilles ou plateaux vibrants (40) disposés en amont dudit grille ou plateau vibrant (36).

8. Système selon l'une des revendications 1 à 7, **caractérisé en ce que** le premier organe briseur est amovible et comprend un rouleau (16a, 16b, 16c) entraîné en rotation.

9. Système selon la revendication 8, **caractérisé en ce que** le rouleau comprend des lignes actives (22) avec une surface supérieure (18) interrompue par des cavités (20), configurée pour réceptionner des feuilles de thé (2), les lignes actives séparées par des cannelures (24) entourant le rouleau, les cavités ayant des surfaces radiales (19) formant avec la surface supérieure (18) des bords supérieurs (21) et les cannelures (24) ayant des surfaces latérales (25) formant avec les surfaces radiales (19) des bords latéraux (27).

10. Système selon l'une des revendications 8 ou 9 **caractérisé en ce que** chacun des rouleaux est entraîné par un système d'entraînement (26a, 26b, 26c) contrôlé de manière à pouvoir varier la vitesse de chaque rouleau de la machine indépendamment.

11. Système selon l'une des revendications 1 à 10, **caractérisé en ce que** la profondeur Pa, Pb, Pc des cavités (20) par rapport à la surface supérieure (18) et/ou la largeur La, Lb, Lc des cavités ainsi que la largeur Wa, Wb, Wc des cannelures sont différentes d'un dispositif briseur à l'autre.

12. Système selon la revendication 11, **caractérisé en ce que** la largeur des cavités et des cannelures d'un organe briseur amovible situé en aval est plus petite que celle d'un organe briseur amovible situé en amont.

13. Système selon l'une des revendications 1 à 12, **caractérisé en ce que** le deuxième organe briseur comprend une paroi briseuse (9) comprenant des dents (30) insérées dans les cannelures (24) et des parties entre-dents (32) au-dessus de la surface supérieure et espacées de cette surface par un jeu contrôlé.

14. Système selon la revendication 13, **caractérisé en ce que** les dents (30) comprennent un bord d'attaque (34) avec une forme convexe.

15. Système selon l'une des revendications 1 à 14, **caractérisé en ce qu'**un angle θ de la paroi briseuse par rapport à un plan orthogonal à la surface dudit premier organe briseur se situe entre -50° et +60°.

16. Système selon l'une des revendications 3 à 15 **caractérisé en ce que** le bord d'attaque a une forme en « V » avec un angle général α entre 80° et 160°.

17. Système selon l'une quelconque des revendications 1 à 16 **caractérisé en ce que** l'organe briseur statique est fixé à un guide d'entrée (10) sous forme d'entonnoir pour guider les feuilles brisées sur la surface de l'organe briseur amovible.

18. Procédé de conditionnement de feuilles séchées de plantes dans une capsule (3) hermétique, comprenant la brisure des feuilles ou brindilles séchées dans un environnement de gaz non-oxydant, l'insertion des feuilles ainsi brisées dans une capsule dans un environnement de gaz non-oxydant, et la fermeture hermétique de la capsule, la brisure comprenant une flexion des feuilles ou brindilles séchées jusqu'à leur rupture par flexion.

19. Procédé selon la revendication 18, comprenant plusieurs étapes de brisure de feuilles ou brindilles séchées, une étape subséquente brisant les feuilles en morceaux plus petits qu'une étape précédente.

20. Procédé selon l'une des deux revendications précédentes **caractérisé en ce que** les feuilles ou brindilles séchées de plantes sont des feuilles de thé séchées.

21. Procédé selon l'une des revendications 18 à 20, utilisant un système selon l'une quelconque des revendications 1 à 17.

## Patentansprüche

1. System (1) zum Verpacken von getrockneten Blättern oder Stängeln von Pflanzen in eine hermetisch verschlossene Kapsel (3), umfassend eine Maschine (4) zum Brechen der getrockneten Blätter, wobei die Maschine einen Eingang (11) für eine Zufuhr der getrockneten Blätter oder Stängel, einen Ausgang (12) für die Ausgabe der gebrochenen getrockneten Blätter oder Stängel, und mindestens eine Brecher-Vorrichtung (5a, 5b, 5c) umfasst, welche ein erstes Brecher-Organ (6) und ein zweites, in Bezug auf das erste Brecher-Organ entfernbares, Brecher-Organ (8) umfasst, wobei das erste und zweite Brecher-Organ dazu eingerichtet sind, getrocknete Blätter oder Stängel bis zu ihrem Bruch zu biegen,
**dadurch gekennzeichnet, dass** die Maschine eine Quelle von neutralem Gas umfasst, welche dazu eingerichtet ist, die Umgebung in der Maschine, inklusive die besagte mindestens eine Brecher-Vorrichtung, zu versorgen, um eine Oxydation der Blätter oder Stängel beim Vorgang des Brechens bis zu ihrem Einbringen in die Kapsel zu verhindern.

2. System (1) nach Anspruch 1, **dadurch gekennzeichnet, dass** die Maschine eine Mehrzahl von Brecher-Vorrichtungen mit unterschiedlicher Abmessung und eingerichtet zum Brechen der getrockneten Blätter oder Stängel in zunehmend kleinere Stücke umfasst, wobei die Maschine bevorzugt mindestens drei Brecher-Vorrichtungen umfasst.

3. System (1) nach einem der Ansprüche 1 oder 2, **dadurch gekennzeichnet, dass** das erste Brecher-Organ eine Walze (16, 16') mit einer oberen Oberfläche und mit Nuten (24), welche um die Walze herum verlaufen, umfasst, und dass das zweite Brecher-Organ eine Brecher-Wand (9) umfasst, welche in die Nuten (24) eingeschobene Zähne (30) und über der oberen Oberfläche und von dieser Oberfläche durch ein kontrolliertes Spiel beabstandete Zwischenzahn-Bereiche (32) umfasst, wobei die Zähne (30) eine Vorderkante (34) mit einer konvexen Form umfassen.

4. System (1) nach einem der Ansprüche 1 bis 3, **dadurch gekennzeichnet, dass** die Brecher-Vorrichtungen einer über dem anderen in Richtung der Gravitationskraft angebracht sind.

5. System (1) nach einem der Ansprüche 1 bis 4, **dadurch gekennzeichnet, dass** das System auch eine Zuführ-Vorrichtung (28) umfasst, welche oberhalb der besagten mindestens einen Brecher-Vorrichtung angeordnet ist, welche dazu eingerichtet ist, einen Regen aus verteilten Blättern oder Stängeln zu erzeugen, welche in einer nichtgruppierten Weise auf die Oberfläche des besagten ersten Brecher-Organs fallen.

6. System nach Anspruch 5, **dadurch gekennzeichnet, dass** die Zuführ-Vorrichtung einen vibrierenden Rost oder eine Platte (36) umfasst, welche erlaubt, einen regelmässigen und feinen Regen von getrockneten Blättern oder Stängeln zu erzeugen, welcher sich über die gesamte Länge des ersten Brecher-Organs erstreckt.

7. System nach einem der Ansprüche 5 oder 6, **dadurch gekennzeichnet, dass** die Zuführ-Vorrichtung einen oder mehrere vibrierende Roste oder Platten (40) umfasst, welche stromaufwärts des besagten vibrierienden Rosts oder Platte (36) angeordnet sind.

8. System nach einem der Ansprüche 1 bis 7, **dadurch gekennzeichnet, dass** das erste Brecher-Organ entfernbar ist und eine Walze (16a, 16b, 16c) umfasst, welche zu einer Drehbewegung angetrieben ist.

9. System nach Anspruch 8, **dadurch gekennzeichnet, dass** die Walze aktive Linien (22) mit einer durch Ausnehmungen (20), welche dazu eingerichtet sind, Blätter von Tee (2) aufzunehmen, unterbrochenen oberen Oberfläche (18) umfasst, wobei die aktiven Linien durch Nuten (24), welche um die Walze herum verlaufen, getrennt sind, wobei die Ausnehmungen radiale Oberflächen (19) haben, welche mit der oberen Oberfläche (18) obere Kanten (21) bilden und wobei die Nuten (24) seitliche Oberflächen (25) haben, welche mit den radialen Oberflächen (19) seitliche Kanten (27) bilden.

10. System nach einem der Ansprüche 8 oder 9, **dadurch gekennzeichnet, dass** jede der Walzen durch ein Antriebssystem (26a, 26b, 26c) angetrieben ist, welches derart angesteuert ist, dass die Geschwindigkeit jeder Walze der Maschine unabhängig verändert werden kann.

11. System nach einem der Ansprüche 1 bis 10, **dadurch gekennzeichnet, dass** die Tiefe Pa, Pb, Pc der Ausnehmungen (20) in Bezug auf die obere Oberfläche (18) und/oder die Breite La, Lb, Lc der Ausnehmungen, so wie die Breite Wa, Wb, Wc der Nuten von einer Brecher-Vorrichtung zur nächsten verschieden sind.

12. System nach Anspruch 11, **dadurch gekennzeichnet, dass** die Breite der Ausnehmungen und der Nuten eines entfernbaren Brecher-Organs, welches stromabwärts angeordnet ist, kleiner ist, als diejenige eines entfernbaren Brecher-Organs, welches stromaufwärts angeordnet ist.

13. System nach einem der Ansprüche 1 bis 12, **dadurch gekennzeichnet, dass** das zweite Brecher-Organ eine Brecher-Wand (9) umfasst, welche in die Nuten (24) eingeschobene Zähne (30) und über der oberen Oberfläche und von dieser Oberfläche durch eine kontrolliertes Spiel beabstandete Zwischenzahn-Bereiche (32) umfasst.

14. System nach Anspruch 13, **dadurch gekennzeichnet, dass** die Zähne (30) eine Vorderkante (34) mit einer konvexen Form umfassen.

15. System nach einem der Ansprüche 1 bis 14, **dadurch gekennzeichnet, dass** ein Winkel θ der Brecher-Wand in Bezug auf eine zur Oberfläche des besagten ersten Brecher-Organs senkrechte Ebene zwischen -50° und +60° liegt.

16. System nach einem der Ansprüche 3 bis 15, **dadurch gekennzeichnet, dass** die Vorderkante eine "V"-Form mit einem allgemeinen Winkel α zwischen 80° und 160° hat.

17. System nach einem der Ansprüche 1 bis 16, **dadurch gekennzeichnet, dass** das feststehende Brecher-Organ an einer Einlass-Führung (10) in der Form eines Trichters angebracht ist, um die gebrochenen Blätter auf die Oberfläche des entfernbaren Brecher-Organs zu führen.

18. Verfahren zur Verpackung getrockneter Blätter von Pflanzen in eine hermetisch verschlossen Kapsel (3), umfassend das Brechen der getrockneten Blätter oder Stängel in einer Umgebung aus nicht-oxydierendem Gas, das Einfüllen der so gebrochenen Blätter in eine Kapsel in einer Umgebung aus nicht-oxydierendem Gas, und das hermetische Verschliessen der Kapsel, wobei das Brechen eine Biegung der getrockneten Blätter oder Stängel bis zu ihrem Bruch durch Biegung umfasst.

19. Verfahren nach Anspruch 18, umfassend mehrere Etappen des Brechens von getrockneten Blättern oder Stängeln, wobei eine nachfolgende Etappe die Blätter in kleinere Stücke bricht als eine vorangehende Etappe.

20. Verfahren nach einem der zwei vorangehenden Ansprüche, **dadurch gekennzeichnet, dass** die getrockneten Blätter oder Stängel von Pflanzen getrocknete Teeblätter sind.

21. Verfahren nach einem der Ansprüche 18 bis 20, wobei ein System nach einem der Ansprüche 1 bis 17 verwendet wird.

## Claims

1. System (1) for packaging dried leaves or stalks of plants in a hermetically sealed casing (3), the system including a machine (4) for breaking dried leaves, the machine comprising an inlet (11) for supplying the dried leaves or stalks, an outlet (12) for releasing the broken dried leaves or stalks, and at least one breaker device (5a, 5b, 5c) including a first breaker member (6) and a second breaker member (8) that can be removed relative to the first breaker member, wherein the first and second breaker members are configured to bend the dried leaves or stalks until they break,
**characterized in that** the machine comprises a source of neutral gas designed to provide an environment in the machine, including the said at least one breaker device, which prevents the oxidation of the leaves or stalks at the time of breaking until their insertion into the casing.

2. System (1) according to claim 1, **characterized in that** the machine comprises multiple breaker devices of different dimensions designed to break the dried leaves or stalks into pieces of gradually decreasing size, preferably the machine comprises at least three breaker devices.

3. System (1) according to one of the claims 1 or 2, **characterized in that** the first breaker member comprises a roller (16, 16') with an upper surface and with grooves (24) around the roller and **in that** the second breaker member comprises a breaker wall (9) with teeth (30) inserted into the grooves (24) and tooth spacings (32) above the upper surface allowing specific clearance from this surface, said teeth (30) comprising a convex-shaped leading edge (34).

4. System (1) according to one of claim 1 to 3, **characterized in that** the breaker devices are assembled one on top of the other in the direction of the gravitational force.

5. System (1) according to one of claims 1 to 4, **characterized in that** said system also comprises a supply device (28) positioned above the said at least one breaker device, designed to generate a well-distributed shower of leaves or stalks falling individually onto the surface of said first breaker member.

6. System according to claim 5 **characterized in that** the supply device comprises a grid or vibrating tray (36) permitting to generate a regular and fine shower of dried leaves or stalks across the entire length of the first breaker member.

7. System according to claim 5 or 6, **characterized in that** the supply device comprises one or more grids or vibrating trays (40) positioned upstream from said grid or vibrating tray (36).

8. System according to one of claims 1 to 7, **characterized in that** the first breaker member is removable and comprises a roller (16a, 16b, 16c) that is caused to rotate.

9. System according to claim 8, **characterized in that** the roller comprises active lines (22) with a top surface (18) interrupted by cavities (20) designed to catch the tea leaves (2), the active lines being separated by grooves (24) around the roller, the cavities having radial surfaces (19) forming upper edges (21) with the top surface (18) and the grooves (24) having lateral surfaces (25) forming side edges (27) with the radial surfaces (19).

10. System according to one of claims 8 or 9, **characterized in that** each of the rollers is driven by a driver system (26a, 26b, 26c) controlled so that the speed of each roller of the machine can be adjusted separately.

11. System according to one of claims 1 to 10, **characterized in that** the depth Pa, Pb, Pc of the cavities (20) in relation to the top surface (18) and/or the width La, Lb, Lc of the cavities of the breaker devices as well as the width Wa, Wb, Wc of the grooves of the breaker devices is different from one breaker device to another.

12. System according to claim 11, **characterized in that** the width of the cavities and the grooves of a removable breaker member located downstream is smaller than that of a removable breaker member located upstream.

13. System according to one of claims 1 to 12, **characterized in that** the second breaker member comprises a breaker wall (9) with teeth (30) inserted into the grooves (24) and tooth spacings (32) above the upper surface, allowing specific clearance from this surface.

14. System according to claim 13, **characterized in that** the teeth (30) comprise a convex-shaped leading edge (34).

15. System according to one of claims 1 to 14, **characterized in that** one angle θ of the breaker wall in relation to an orthogonal plane on the surface of the said first breaker member is between -50° and +60°.

16. System according to one of claims 3 to 15, **characterized in that** the leading edge forms a "V" shape and has a general angle α of between 80° and 160°.

17. System according to one of claims 1 to 16, **characterized in that** the static breaker member is attached to an inlet guide (10) in the shape of a funnel to guide the broken leaves onto the surface of the removable breaker member.

18. Method of packaging dried leaves of plants in a hermetically sealed casing (3), involving breaking the dried leaves or stalks in an environment of non-oxidising gas, inserting the broken leaves into a casing in an environment of non-oxidising gas, and hermetically sealing the casing, breaking the dried leaves or stalks involves bending them until they break.

19. Method according to claim 18, comprising several stages for breaking the dried leaves or stalks, each subsequent stage breaking the leaves into smaller pieces than the previous stage.

20. Method according to one of the two preceding claims, **characterized in that** the dried plant leaves or stalks are dried tea leaves.

21. The method according to one of claims 18 to 20, using a system according to any one of claims 1 to 17.
